# EUROPÄISCHE PATENTSCHRIFT

(11) **EP 1 028 269 B1**
(45) Veröffentlichungstag und Bekanntmachung des Hinweises auf die Patenterteilung: **17.12.2003**
(21) Anmeldenummer: 00101620.3
(22) Anmeldetag: 28.01.2000
(51) Int. Cl.: F16F 15/26

(54) **Kurbelwelle mit Torsionsschwingungsdämpfer**
Crankshaft with torsional vibration damper
Vilebrequin avec amortisseur de vibrations torsionelles

(30) Priorität: 10.02.1999 DE 19905471
(43) Veröffentlichungstag der Anmeldung: 16.08.2000
(73) Patentinhaber: Volkswagen Aktiengesellschaft, 38436 Wolfsburg (DE)
(72) Erfinder: Westphal, Christian, Dr., 38527 Meine (DE); Nederkorn, Walter, 38518 Gifhorn (DE); Arnold, Olaf, Dr., 09395 Hormersdorf (DE); Budde, Roger, 09117 Chemnitz (DE)

(56) Entgegenhaltungen:
- CH-A- 231 310
- DE-A- 3 238 572
- DE-A- 3 622 630
- DE-A- 3 925 181
- DE-B- 1 253 946
- DE-C- 972 427
- DE-U- 9 104 812
- US-A- 4 262 553
- US-A- 4 854 274

## Beschreibung

Die Erfindung betrifft Torsionsschwingungsdämpfer mit Kurbelwelle nach dem Oberbegriff des Patentanspruches 1.

Vorbekannt sind gattungsgemäße Torsionsschwingungsdämpfer mit Kurbelwelle aus der Schrift DE 32 38 572 A1. Die Nabe des Torsionsschwingungsdämpfers ist drehfest an einer Welle angeflanscht und an ihr befestigte Federn mit einem als Dämpfungsmasse wirkenden Außenteil verbunden. Der Massenschwerpunkt des Außenteils liegt exzentrisch zur Drehachse der Welle, so daß er bei geeigneter Positionierung als Massenausgleichsgewicht für die Kurbelwelle dient. Das Außenteil wirkt somit als Dämpfungsmasse für Torsionsschwingungen und auch als Ausgleichsmasse für den Kurbeltrieb.
Nachteilig ist, daß der Torsionsschwingungsdämpfer neben den Kurbeln der Kurbelwelle axial noch zusätzlichen Bauraum benötigt.

Der Erfindung liegt die Aufgabe zugrunde, einen Torsionsschwingungsdämpfer mit Kurbelwelle der gattungsgemäßen Art zu schaffen, der im unmittelbaren Bauraum eines Kurbeltriebes, Baulänge sparend, im Motor angebracht werden kann und dessen Ausführung eine hohe Lebensdauer gewährleistet.

Diese Aufgabe wird erfindungsgemäß durch die kennzeichnenden Merkmale des Patentanspruches 1 gelöst.

In einer vorteilhaften Weitergestaltung können zur Erhöhung des Federweges die an die Nabe angekoppelten waagebalkenartigen Arme ebenfalls drehelastisch ausgebildet sein. Nabe und Arme bilden dann eine Verbundfeder aus Drehstabfeder (Nabe) und Biegefeder (Arme).

Eine vorteilhafte Ausführung des Erfindungsgegenstandes sieht vor, daß der federnde Bereich des Torsionsschwingungsdämpfer einstückig ausgeführt ist und aus Titan bzw. einer Titanlegierung besteht. Die günstigere Eigenschaft von Titan bzw. einer Titanlegierung gegenüber Stahl, ein niedrigeres Gleitmodul bei gleicher oder höherer Wechselfestigkeit, ermöglicht eine geringere Federlänge bei gleichen Federwegen und somit eine bauraumsparende Konstruktion.

In einer weiteren möglichen vorteilhaften Ausgestaltung der Erfindung kann die Nabe gegenüber ihrer Befestigung an der Kurbelwelle eine zweite Lagerung aufweisen, womit die Belastung des Lagers durch die auftretenden Fliehkräfte vermindert wird.

In vorteilhafter Ausgestaltung liegt die Drehachse des
Torsionsschwingungsdämpfers, entgegengesetzt zu einer angrenzenden Kurbel, von der Drehachse der Kurbelwelle entfernt. Der Massenschwerpunkt der gesamten Dämpfermasse befindet sich dadurch außerhalb der Drehachse der Kurbelwelle in einem Bereich gegenüber der angrenzenden Kurbel, womit diese Dämpfermasse gleichzeitig einen Teil der Ausgleichsmasse des Kurbeltriebes bildet.

In einer weiteren möglichen vorteilhaften Ausgestaltung der Erfindung liegen die Drehachse des Torsionsschwingungsdämpfers und die der Kurbelwelle an derselben Position, der Massenschwerpunkt des Torsionsschwingungsdämpfers jedoch, durch exzentrisches Anbringen der Dämpfermassen, außerhalb der Drehachse der Kurbelwelle.

In vorteilhafter Weitergestaltung der Erfindung kann die Dämpfermasse von einem abgeschlossenen Gehäuse umgeben sein, in welchem sich ein Fluid mit angepaßter Viskosität befindet. Durch den Strömungswiderstand des Fluids werden die Schwingungen der sich darin bewegenden Massen gedämpft.

Für eine einfache Montage ist es vorteilhaft, den Torsionsschwingungsdämpfer als eine vormontierbare Einheit auszubilden, der mit Fluid befüllt und komplett montiert an der Kurbelwelle drehfest angeordnet werden kann.

Nachfolgend werden Ausführungsbeispiele der Erfindung anhand von Zeichnungen beschrieben.

Es zeigt:
Figur 1 eine perspektivische Darstellung eines Teils der Kurbelwelle mit einem Torsionschwingungsdämpfer gemäß der Erfindung,
Figur 2 eine Nabe mit Armen als Verbundfeder,
Figur 3 eine halbseitig geschnittene Darstellung eines Teils der Kurbelwelle mit gekapseltem Torsionsschwingungsdämpfer.
Figur 4 eine halbseitig geschnittene Seitenansicht der Kurbelwelle mit gekapseltem Torsionsschwingungsdämpfer.

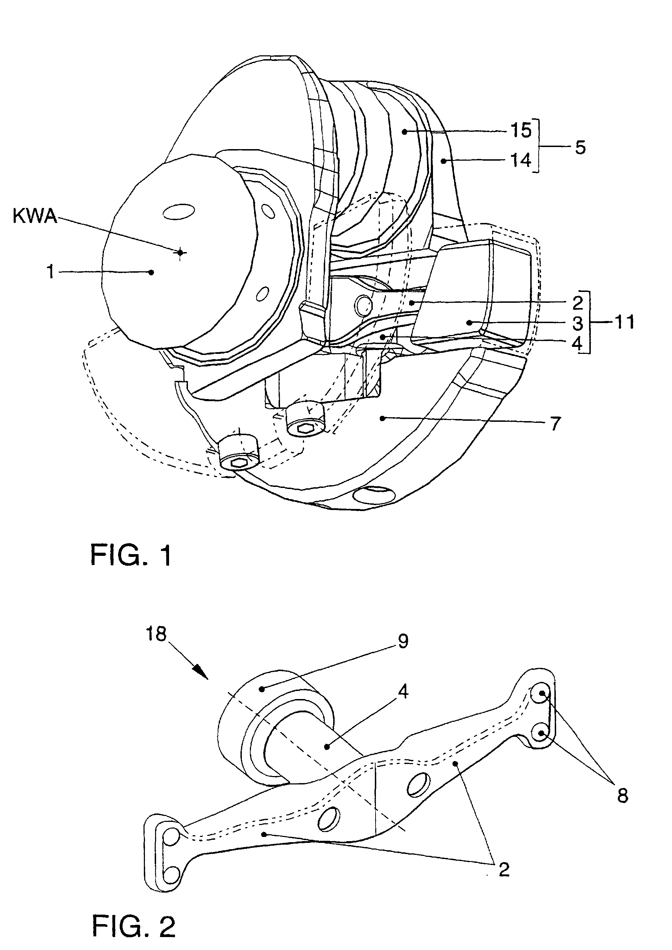

In Fig. 1 ist ein Teil der erfindungsgemäßen Kurbelwelle 1 mit einer Dämpferanordnung perspektivisch dargestellt. Der Torsionsschwingungsdämpfer 11 besteht aus der Nabe 4, den waagebalkenartigen Armen 2 und den Dämpfungsmassen 3. Die als Drehstabfeder ausgeführte Nabe 4 ist exzentrisch zur Drehachse der Kurbelwelle KWA, im axialen Bereich der, aus Kurbelarmen 14 und Kurbelzapfen 15 bestehenden, Kurbel 5, angekoppelt. Sie weist elastisch verformbare Arme 2 auf, an denen jeweils eine Dämpfungsmasse 3 fest angeordnet ist. Der Massenschwerpunkt des Torsionsschwingers 11 liegt exzentrisch zur Drehachse der Kurbelwelle KWA in einem Bereich gegenüber der angrenzenden Kurbel 5. Gemeinsam mit einem Gegengewicht 7 bildet die Kombination aus der Nabe 4 mit den Armen 2 und den Dämpfungsmassen 3 einen Teil der Ausgleichsmasse für den Kurbeltrieb. Bei solcher Ausführung und Anordnung des Torsionsschwingungsdämpfers 11 dient er gleichzeitig dem Massenausgleich und der Schwingungsdämpfung. Die Nabe 4 und die daran fest gekoppelten Arme 2 bilden in ihrer Gesamtheit eine Verbundfeder, die sich aus Drehstabfeder - drehelastische Ausführung der Nabe 4- und Biegefeder -elastische Ausführung der Arme 2- zusammensetzt.

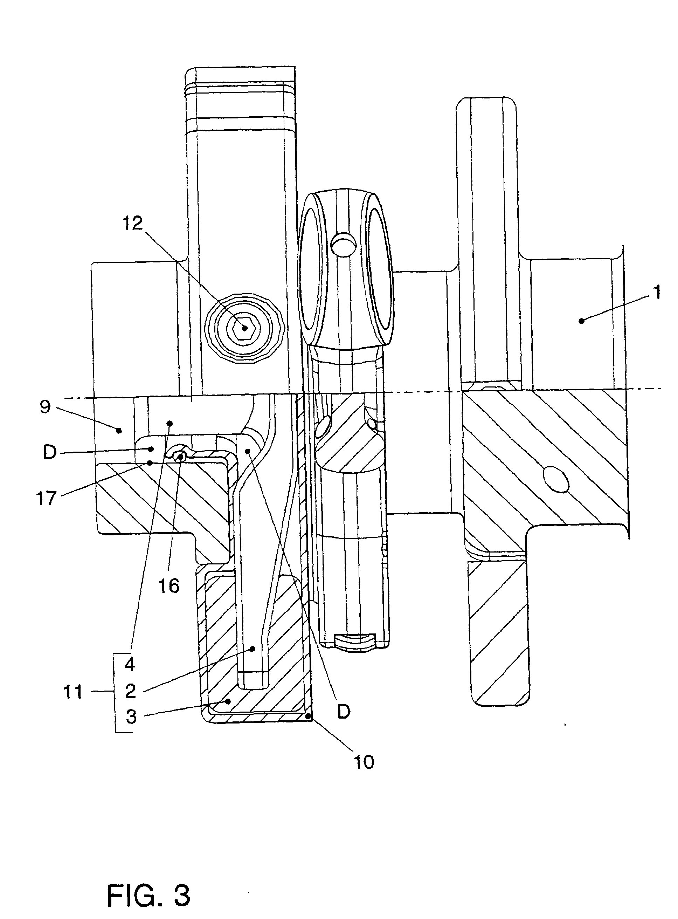

Fig. 2 zeigt schematisiert die Verbundfeder 18, die aus der Nabe 4 mit den elastischen Armen 2 besteht. Sie weist einen radial aufgeweiteten Koppelbereich 9 auf, über weichen sie mit der Kurbelwelle 1 (siehe Fig. 3), durch Schrumpfen in einer zentralen Aufnahmebohrung, verbunden ist. Gegenüber des Koppelbereiches 9 sind an der als Drehstabfeder ausgeführten Nabe 4 biegeelastische waagebalkenartige Arme 2 fest angekoppelt. Diese weisen im radialen Bereich Bohrungen 8 zum Befestigen der Dämpfermassen 3 auf (nicht dargestellt).

Fig. 3 zeigt eine halbseitig geschnittene Darstellung eines Teils der Kurbelwelle 1 mit gekapseltem Torsionsschwingungsdämpfer 11. Die Nabe 4 ist über Ihren radial erweiterte Koppelbereich 9 drehfest mit der Kurbelwelle 1 verbunden. Sie weist gegenüber Ihres Koppelbereiches waagebalkenartige elastische Arme 2 auf, an denen die Dämpfungsmassen 3 fest angenietet sind. Der Torsionsschwinger 11 ist von einem Gehäuse 10 umschlossen, daß durch Schrauben 12 und Gewindehülsen 13 zusammen mit dem Gegengewicht 7 drehfest mit der Kurbelwelle 1 verbunden ist. Das Gehäuse 10 ist im Bereich der Aufnahmebohrung 17 mit einer Dichtung 16 versehen. In dem durch das Gehäuse 10, die Nabe 4, Dichtung 16 und die Kurbelwelle 1 hermetisierten Raum D befindet sich ein Fluid angepaßter Viskosität. Die Schwingungen der Dämpfermassen 3 an den elastischen Armen 2 werden einerseits, durch Scherkräfte zwischen den bewegten Dämpfermassen 3 und dem Fluid und andererseits, durch den zwischen Ihnen und dem Gehäuse 10 wirkenden Strömungswiderstand des Fluids gedämpft.

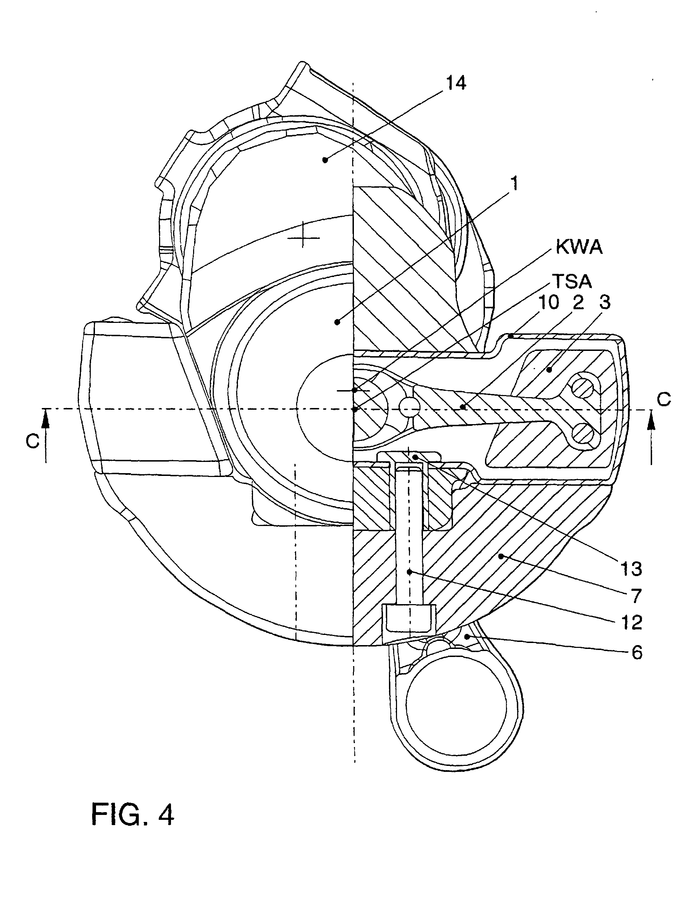

Fig. 4 zeigt eine halbseitig geschnittene Seitenansicht der Kurbelwelle 1. Ein Pleuel 6 ist drehbar mit einem Kurbelzapfen 15 der Kurbelwelle 1 verbunden. Die Kurbelwelle 1 ist drehbar gelagert und um ihre Drehachse KWA bewegbar. Im axialen Bereich der Kurbel 5 ist, mit ihrem Koppelbereich 9, drehfest die Nabe 4 angekoppelt. An ihr sind die Arme 2 und die dort befestigten Dämpfungsmassen 3 angeordnet. Das Gehäuse 10 ist mit zwei, bezüglich der Drehachse des Torsionsschwingungsdämpfers 11 symetrisch liegenden, Gewindehülsen 13 und zugehörigen Schrauben 12 fest mit der Kurbelwelle verschraubt. Es umschließt den Torsionsschwingungsdämpfer 11 und ist mit einem Fluid angepaßter Viskosität zum Dämpfen seiner Schwingungen gefüllt. Die Drehachse TSA des Torsionsschwingungsdämpfers 11 und dessen Massenschwerpunkt liegen exzentrisch zur Drehachse der Kurbelwelle KWA in einem Bereich gegenüber der angrenzenden Kurbel 5. Durch die exzentrische Lage des Massenschwerpunktes des Torsionsschwingungsdämpfers 11 zur Drehachse der Kurbelwelle KWA ist er gleichzeitig Teil der Gesamtausgleichsmasse für die Massenunwucht des rotierenden Systems von Kurbelwelle 1 mit Kurbel 5 und Pleuel 6. Das mit der Schraube 12 und der Gewindehülse 13 drehfest mit der Kurbelwelle 1 verschraubte Gegengewicht 7 bildet den anderen Teil der Gesamtausgleichsmasse.

### Bezugszeichenliste

- 1: Kurbelwelle
- 2: Arme
- 3: Dämpfungsmasse
- 4: Nabe
- 5: Kurbel
- 6: Pleuel
- 7: Gegengewicht
- 8: Bohrungen
- 9: Koppelbereich der Nabe
- 10: Gehäuse
- 11: Torsionsschwingungsdämpfer
- 12: Schraube
- 13: Gewindehülse
- 14: Kurbelarm
- 15: Kurbelzapfen
- 16: Dichtung
- 17: Aufnahmebohrung
- 18: Verbundfeder
- TSA: Drehachse des Torsionsschwingers
- KWA: Drehachse der Kurbelwellen
- D: hermetisierter Raum

## Patentansprüche

1. Torsionsschwingungsdämpfer mit Kurbelwelle eines Verbrennungsmotors mit um die Drehachse der Kurbelwelle (KWA) umlaufenden federnd angekoppelten Dämpfermassen (3),
**dadurch gekennzeichnet,**
**daß** im axialen Bereich einer Kurbel (5) der Kurbelwelle (1) eine als Torsionsfeder ausgebildete Nabe (4) drehfest mit der Kurbelwelle (1) verbunden ist, an der über waagebalkenartige Arme (2), in den axialen Bereich neben einem Pleuel reichende, Dämpfermassen (3) angekoppelt sind.

2. Torsionsschwingungsdämpfer nach Anspruch 1
**dadurch gekennzeichnet,**
**daß** die Arme (2), an denen die Dämpfermassen (3) befestigt sind, biegeelastisch ausgebildet sind.

3. Torsionsschwingungsdämpfer nach Anspruch 1
**dadurch gekennzeichnet,**
**daß** die Nabe (4) mit waagebalkenartigen Armen (2) einstückig ausgebildet ist.

4. Torsionsschwingungsdämpfer nach Anspruch 1
**dadurch gekennzeichnet,**
**daß** die Nabe (4) mit den waagebalkenartigen Armen (2) aus Titan oder einer Titanlegierung besteht.

5. Torsionsschwingungsdämpfer nach Anspruch 1
**dadurch gekennzeichnet,**
**daß** die Nabe (4) gegenüber ihrer Befestigung im axialen Bereich der Kurbel (5) eine zweite Lagerung aufweist.

6. Torsionsschwingungsdämpfer nach Anspruch 1
**dadurch gekennzeichnet,**
**daß** die Drehachse (9) des Torsionsschwingers (11) in einem Bereich gegenüber einer angrenzenden Kurbel (5) exzentrisch zur Drehachse der Kurbelwelle (KWA) liegt.

7. Torsionsschwingungsdämpfer nach Anspruch 1
**dadurch gekennzeichnet,**
**daß** der Massenschwerpunkt des Torsionsschwingers (11) unterhalb der Drehachse der Kurbelwelle (KWA), somit einen Teil der Ausgleichsmasse des Kurbeltriebes bildend, liegt.

8. Torsionsschwingungsdämpfer nach Anspruch 1
**dadurch gekennzeichnet ,**
**daß** der Gesamtmassenausgleich aus dem Torsionsschwingungsdämpfer (11) und einem drehfest angeordneten Gegengewicht (7) besteht.

9. Torsionsschwingungsdämpfer nach Anspruch 1
**dadurch gekennzeichnet,**
**daß** der Torsionsschwinger (11) von einem drehfest an der Kurbelwelle (1) angeordneten Gehäuse (10) umgeben ist.

10. Torsionsschwingungsdämpfer nach Anspruch 1
**dadurch gekennzeichnet ,**
**daß** das den Torsionschwinger (11) umschließende Gehäuse (10) im Koppelbereich (9) der Nabe (4) befestigt ist und durch die Kopplung zur Kurbelwelle (1), Gehäuse (10) und Nabe (4) drehfest mit der Kurbelwelle (1) verbunden sind.

11. Torsionsschwingungsdämpfer nach Anspruch 10
**dadurch gekennzeichnet,**
**daß** der Torsionschwinger (11) und das ihn umschließende Gehäuse (10) als eine vormontierte Kassette ausgebildet sind.

12. Torsionsschwingungsdämpfer nach Anspruch 11
**dadurch gekennzeichnet,**
**daß** die vormontierte Einheit aus Torsionschwinger (11 ) und dem ihn umschließenden Gehäuse (10) abgedichtet ausgeführt ist.

13. Torsionsschwingungsdämpfer nach Anspruch 9-12
**dadurch gekennzeichnet,**
**daß** das Gehäuse (10) der Dämpfermassen (3) mit einem Fluid geeigneter Viskosität gefüllt ist.

## Claims

1. Torsional vibration damper with crankshaft for an internal combustion engine with damper masses (3) which are coupled in a strong fashion so as to rotate about the axis of rotation of the crankshaft (KWA), **characterized in that** a hub (4) which is embodied as a torsional spring is connected fixed in terms of rotation to the crankshaft (1) in the axial region of a crank (5) of the crankshaft (1), damper masses (3) which extend into the axial region next to the connecting rod being coupled to said hub (4) by means of balance-beam-like arms (2).

2. Torsional vibration damper according to Claim 1, **characterized in that** the arms (2) to which the damper masses (3) are attached are of flexurally elastic construction.

3. Torsional vibration damper according to Claim 1, **characterized in that** the hub (4) is constructed in one piece with balance-beam-like arms (2).

4. Torsional vibration damper according to Claim 1, **characterized in that** the hub (4) with the balance-beam-like arms (2) is composed of titanium or a titanium alloy.

5. Torsional vibration damper according to Claim 1, **characterized in that** the hub (4) has a second bearing opposite its attachment in the axial region of the crank (5).

6. Torsional vibration damper according to Claim 1, **characterized in that** the axis of rotation (9) of the torsional vibrator (11) lies in a region opposite an adjoining crank (5), eccentrically with respect to the axis of rotation of the crankshaft (KWA).

7. Torsional vibration damper according to Claim 1, **characterized in that** the centre of gravity of the torsional vibrator (11) lies underneath the axis of rotation of the crankshaft (KWA), thus forming part of the compensating mass of the crank drive.

8. Torsional vibration damper according to Claim 1, **characterized in that** the overall mass compensation means is composed of the torsional vibration damper (11) and a counterweight (7) arranged fixed in terms of rotation.

9. Torsional vibration damper according to Claim 1, **characterized in that** the torsional vibrator (11) is surrounded by a housing (10) which is arranged fixed in terms of rotation on the crankshaft (1).

10. Torsional vibration damper according to Claim 1, **characterized in that** the housing (10) which surrounds the torsional vibrator (11) is attached in the coupling region (9) of the hub (4) and the housing (10) and hub (4) are connected fixed in terms of rotation to the crankshaft (1) by means of the coupling to the crankshaft (1).

11. Torsional vibration damper according to Claim 10, **characterized in that** the torsional vibrator (11) and the housing (10) surrounding it are embodied as a premounted cassette.

12. Torsional vibration damper according to Claim 11, **characterized in that** the premounted unit composed of the torsional vibrator (11) and the housing (10) surrounding it are of sealed design.

13. Torsional vibration damper according to Claims 9 to 12, **characterized in that** the housing (10) of the damper masses (3) is filled with a fluid with a suitable viscosity.

## Revendications

1. Amortisseur de vibrations par torsion, associé avec le vilebrequin d'un moteur à combustion interne et comprenant des masses d'amortissement (3), en accouplement élastique et s'étendant autour de l'axe de rotation du vilebrequin (KWA),
**caractérisé en ce que**
dans la zone axiale d'un élément (5) du vilebrequin (1), un moyeu (4), conformé comme un ressort de torsion, est solidaire, avec blocage en rotation, avec le vilebrequin (1), et est accouplé, par le biais de bras (2) en forme de fléau de balance, avec des masses d'amortissement (3) dans la zone axiale près d'une bielle.

2. Amortisseur de vibrations par torsion selon la revendication 1,
**caractérisé en ce que**
les bras (2), auxquels les masses d'amortissement (3) sont fixées, ont une conformation assurant une élasticité à la flexion.

3. Amortisseur de vibrations par torsion selon la revendication 1,
**caractérisé en ce que**
le moyeu (4) est monobloc avec les bras (2) en forme de fléau de balance.

4. Amortisseur de vibrations par torsion selon la revendication 1,
**caractérisé en ce que**
le moyeu (4) avec les bras (2) en forme de fléau de balance est constitué de titane ou d'un alliage de titane.

5. Amortisseur de vibrations par torsion selon la revendication 1,
**caractérisé en ce que**
le moyeu (4) présente, par rapport à sa fixation dans la zone axiale de l'élément de vilebrequin (5), une seconde portée de support.

6. Amortisseur de vibrations par torsion selon la revendication 1,
**caractérisé en ce que**
l'axe de rotation (9) de l'amortisseur de vibrations par torsion (11) se situe dans une zone en regard d'un élément de vilebrequin (5) voisin, en position excentrée par rapport à l'axe de rotation du vilebrequin (KWA).

7. Amortisseur de vibrations par torsion selon la revendication 1,
**caractérisé en ce que**
le centre de gravité de l'amortisseur de vibrations par torsion (11) se situe en dessous de l'axe de rotation du vilebrequin (KWA), ledit amortisseur de vibrations par torsion constituant ainsi une partie de la masse d'équilibrage lors de l'entraînement du vilebrequin.

8. Amortisseur de vibrations par torsion selon la revendication 1,
**caractérisé en ce que**
l'ensemble d'équilibrage des masses se compose de l'amortisseur de vibrations par torsion (11) et d'un contrepoids (7) monté avec blocage en rotation.

9. Amortisseur de vibrations par torsion selon la revendication 1,
**caractérisé en ce que**
l'amortisseur de vibrations par torsion (11) est entouré d'un boîtier (10), monté avec blocage en rotation sur le vilebrequin (1).

10. Amortisseur de vibrations par torsion selon la revendication 1,
**caractérisé en ce que**
le boîtier (10) entourant l'amortisseur de vibrations par torsion (11) est fixé dans la zone d' accouplement (9) du moyeu (4) et **en ce que**, par accouplement par rapport au vilebrequin (1), le boîtier (10) et le moyeu (4) sont reliés, avec blocage en rotation, au vilebrequin (1).

11. Amortisseur de vibrations par torsion selon la revendication 10,
**caractérisé en ce que**
l'amortisseur de vibrations par torsion (11) et le boîtier (10) qui l'entoure sont conformés comme une cassette pré-montée.

12. Amortisseur de vibrations par torsion selon la revendication 11,
**caractérisé en ce que**
l'unité pré-montée, composée de l'amortisseur de vibrations par torsion (11) et du boîtier (10) qui entoure celui-ci, est réalisée avec étanchéité.

13. Amortisseur de vibrations par torsion selon l'une des revendications 9 à 12,
**caractérisé en ce que**
le boîtier (10) des masses d'amortissement (3) est rempli d'un fluide de viscosité appropriée.
